(19) Europäisches Patentamt
European Patent Office
Office européen des brevets

(11) **EP 3 769 931 A1**

(12) **EUROPÄISCHE PATENTANMELDUNG**

(43) Veröffentlichungstag:
**27.01.2021   Patentblatt 2021/04**

(21) Anmeldenummer: **20178679.5**

(22) Anmeldetag: **08.06.2020**

(51) Int Cl.:
*B29C 48/25* (2019.01)    *B29C 48/30* (2019.01)
*B29C 48/00* (2019.01)    *B29C 48/16* (2019.01)
*B29C 48/49* (2019.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **25.07.2019   DE 102019211020**

(71) Anmelder: **Continental Reifen Deutschland GmbH 30165 Hannover (DE)**

(72) Erfinder:
• **Habrman, Zdenek**
 **30419 Hannover (DE)**
• **Pfaff, Florian**
 **30419 Hannover (DE)**
• **Völker, Thomas**
 **30419 Hannover (DE)**

(74) Vertreter: **Finger, Karsten**
 **Continental Aktiengesellschaft**
 **Patente und Lizenzen**
 **Postfach 169**
 **30001 Hannover (DE)**

(54) **FORMGEBUNGSVORRICHTUNG ZUM LEITEN VON EXTRUDIERTEN KAUTSCHUKMISCHUNGEN IN EINE ENDFORMEINHEIT ZUM AUSFORMEN VON KAUTSCHUKMISCHUNGEN, VERWENDUNG DER VORRICHTUNG UND EIN VERFAHREN ZUM AUSFORMEN EINES KAUTSCHUKPROFILS**

(57)     Die Erfindung betrifft eine Formgebungsvorrichtung zum Leiten von extrudierten Kautschukmischungen in eine Endformeinheit zum Ausformen von Kautschukmischungen, umfassend mindestens eine erste und eine zweite Grundfläche und eine Kontaktfläche sowie mehrere Fließkanäle zum Führen einer Kautschukmischung, wobei jede Grundfläche mindestens eine Eingangsöffnung zum Einführen einer Kautschukmischung in einen der Fließkanäle aufweist und die Kontaktfläche Ausgangsöffnungen zum Überführen einer Kautschukmischung in eine Endformeinheit zum Ausformen von Kautschukmischungen aufweist, dadurch gekennzeichnet, dass sich eine erste Distanz zwischen mindestens einer Eingangsöffnung der ersten Grundfläche und dem mit der jeweiligen Eingangsöffnung verbundenen Ausgangsöffnung auf der Kontaktfläche von einer zweiten Distanz zwischen mindestens einer Eingangsöffnung einer zweiten Grundfläche und mit der jeweiligen Eingangsöffnung verbundenen Ausgangsöffnung auf der Kontaktfläche unterscheidet. Die Erfindung betrifft auch die Verwendung der Vorrichtung und ein Verfahren zum Ausformen eines Kautschukprofils.

Fig. 2

**Beschreibung**

Die Erfindung betrifft eine Formgebungsvorrichtung zum Leiten von extrudierten Kautschukmischungen in eine Endformeinheit zum Ausformen von Kautschukmischungen. Die Erfindung betrifft auch die Verwendung der Vorrichtung und ein Verfahren zum Ausformen eines Kautschukprofils.

Der in der kautschukverarbeitenden Industrie ist die Temperaturkontrolle einer Kautschukmischung zu jedem Zeitpunkt im Herstellungsprozess für die Qualität des entstehenden technischen Gummiartikels von höchster Bedeutung. Insbesondere in den Extrudern und den Extruderköpfen kommt es häufig dazu, dass sich eine Kautschukmischung unerwarteter Weise erhitzt. Wird einer solchen Temperaturerhöhung zum Beispiel durch eine verlangsamte Fließgeschwindigkeit nicht entgegengewirkt, so kann es sogar zu einem so genannten Scorch kommen, bei dem die Kautschukmischung Temperaturen erreicht, bei denen Sie bereits vulkanisiert. Ungewollte Temperaturerhöhungen können daher nicht nur die Qualität eines Kautschukproduktes verringern, sondern auch dazu führen, dass ein falsch hergestelltes Produkt verworfen werden muss.

Im Stand der Technik sind verschiedene Geometrien für Extruderköpfe veröffentlicht:

EP 3221117 A1 offenbart einen "[...] Extrusionskopf (18) mit (i) einem Kopfgehäuse (20), das zumindest vier Zuführöffnungen (38.i) aufweist, die mit jeweils einem zugeordneten Extruder (12.i) zum Zuführen von Extrusionsmaterial verbunden sind, und (ii) einem Spritzwerkzeug (22) zum Formen eines Extrusionsstrangs aus den Extrusionsmaterialien, das mit dem Kopfgehäuse (20) verbunden ist, eine Austrittsöffnung (26) besitzt und so angeordnet ist, dass durch die Zuführöffnungen (38.i) zugeführtes Extrusionsmaterial entlang eines jeweiligen Materialpfads zur Austrittsöffnung (26) leitbar ist [...]" (s. Anspruch 1).

EP 3288741 A1 offenbart einen "Mehrfach-Strangpresskopf zum Herstellen von Laufprofilen von Reifen, [...] dadurch gekennzeichnet, dass (f) der Grundkörper (12) eine fünfte Zuführöffnung (30) zum Anschließen eines fünften Extruders hat und dass (g) der Mehrfach-Strangpresskopf (10) einen zweiten Fließkanaleinsatz (20) aufweist, der unabhängig vom ersten Fließkanaleinsatz (18) relativ zum Grundkörper (12) schwenkbar gelagert ist und einen fünften Fließkanal (42) begrenzt, der mit der fünften Zuführöffnung (30) verbunden ist" (s. Anspruch 1).

Ein Problem aus dem Stand der Technik ist, dass es verschiedene Zielkonflikte gibt, welche die Extrusionsgeschwindigkeit, die Abweichungen der Querschnittsform der ausgeformten Kautschukmischungen und die Kautschukzusammensetzung einer Kautschukmischung limitieren. Beispielsweise führt in der Regel eine erhöhte Extrusionsgeschwindigkeit oder Viskosität der extrudierten Kautschukmischung zu höheren Abweichungen der Querschnittsform der ausgeformten Kautschukmischungen und/oder zu höheren Temperaturen und Drücken beim Extrudieren oder Ausformen.

Eine Aufgabe, die der Erfindung zugrunde liegt, besteht darin, einen Formgebungsvorrichtung zum Leiten von extrudierten Kautschukmischungen in eine Endformeinheit zum Ausformen von Kautschukmischungen bereitzustellen, wobei die Formgebungsvorrichtung eine schnelleres Austrittsgeschwindigkeit von Kautschukmischungen und/oder ein Führen von Kautschukmischungen mit niedrigeren Temperaturen in der Formgebungsvorrichtung ermöglicht.

Gelöst wird diese Aufgabe erfindungsgemäß durch eine Formgebungsvorrichtung zum Leiten von extrudierten Kautschukmischungen in eine Endformeinheit zum Ausformen von Kautschukmischungen, umfassend

- mindestens eine erste und eine zweite Grundfläche und
- eine Kontaktfläche sowie
- mehrere Fließkanäle zum Führen einer Kautschukmischung,
   wobei
- jede Grundfläche mindestens eine Eingangsöffnung zum Einführen einer Kautschukmischung in einen der Fließkanäle aufweist und
- die Kontaktfläche Ausgangsöffnungen zum Überführen einer Kautschukmischung in eine Endformeinheit zum Ausformen von Kautschukmischungen aufweist,
   dadurch gekennzeichnet, dass
   sich
- eine erste Distanz zwischen mindestens einer Eingangsöffnung der ersten Grundfläche und dem mit der jeweiligen Eingangsöffnung verbundenen Ausgangsöffnung auf der Kontaktfläche
- von einer zweiten Distanz zwischen mindestens einer Eingangsöffnung einer zweiten Grundfläche und mit der jeweiligen Eingangsöffnung verbundenen Ausgangsöffnung auf der Kontaktfläche

unterscheidet.

Es ist eine große Leistung der vorliegenden Erfindung herausgefunden zu haben, dass durch die spezielle Anordnung der Fließkanäle an einer ersten und an einer zweiten Grundfläche und der damit ermöglichten Anpassung der Länge der Fließkanäle in einer erfindungsgemäßen Vorrichtung Kautschukmischungen

- schneller bei den gleichen Formabweichungen im Kautschukprofil,
- formgenauer bei der gleichen Austrittsgeschwindigkeit des Kautschukprofils oder
- hochviskosere Kautschukmischungen bei den gleichen Formabweichungen im Kautschukprofil oder bei der gleichen Austrittsgeschwindigkeit des Kautschukprofils erreicht werden können.

Im Rahmen der vorliegenden Erfindung ist die Austrittsgeschwindigkeit eines Kautschukprofils bevorzugt die Geschwindigkeit, mit der die Kautschukmischung aus der Endschablone austritt. Die Austrittsgeschwindigkeit wird dabei mit der Einheit [m/s] angegeben.

Bevorzugt ist es, wenn jeder Fließkanal einer erfindungsgemäßen Formgebungsvorrichtung genau eine Eingangsöffnung und eine Ausgangsöffnung aufweist.

Mittels der gewünschten Längenanpassung der Fließkanäle einer erfindungsgemäßen Vorrichtung können je nach Anforderungen der im jeweiligen Fließkanal ausgeformten Kautschukmischung die Austrittsgeschwindigkeit, die Formgenauigkeit des Kautschukprofils oder die Viskosität der Kautschukmischung erhöht werden. Dies löst beispielsweise das Problem, dass im Gegensatz zu bekannten Formgebungsvorrichtungen mit gleichlangen Fließkanälen hochviskosere Kautschukmischungen in den kurzen Fließkanälen genauso schnell wie niedrigviskosere Kautschukmischungen in dazu längeren Fließkanälen extrudieren werden können. Besonders vorteilhaft ist dabei, dass diese hochviskoseren Kautschukmischungen beim Extrudieren keine zu hohen Temperaturen erreichen. Die größeren Temperaturen im Extruderkopf folgen in der Regel aus den höheren Drücken beim Extrudieren und können die chemischen und physikalischen Eigenschaften des aus der Kautschukmischung entstehenden Gummiprodukts negativ beeinflussen. Durch die Verkürzung der Fließkanäle für die hochviskoseren Kautschukmischungen wie in einer erfindungsgemäßen Vorrichtung kann dieses Problem gelöst werden.

Ein ähnliches Problem entsteht mutatis mutandis, wenn bestimmt Fließkanäle kleiner sind und somit ein höheres Verhältnis von Umfang zu Querschnittsfläche oder einen höheren Verjüngungswinkel aufweisen. Auch hier können sich der Druck und die Temperatur der Kautschukmischung im Fließkanal erhöhen, was wiederum mit der vorstehend beschriebenen Verkürzung der Fließkanäle erreicht wird. Abschließend kann somit festgehalten werden, dass eine Anpassung der Länge der Fließkanäle entsprechen der jeweiligen Fließkanal- oder Mischungseigenschaften, sämtliche der vorstehend beschriebenen Probleme löst.

Im Rahmen der vorliegenden Erfindung umfasst eine Formgebungsvorrichtung insbesondere einen Extruderkopf und eine Vorschablone, wobei die vor Schablone so eingerichtet ist, dass sie extrudierte Kautschukmischungen in eine Endformeinheit zum Ausformen von Kautschukmischungen leiten kann.

Im Rahmen der vorliegenden Erfindung wird die Länge eines Fließkanals bevorzugt von dem geometrischen Mittelpunkts einer Eingangsöffnung in einer Grundfläche einer erfindungsgemäßen Vorrichtung entlang der Mittelachse eines Fließkanals bis zum geometrischen Mittelpunkts des mit dem besagten Eingangsöffnung verbundenen Ausgangsöffnung gemessen.

Im Rahmen der vorliegenden Erfindung ist eine Eingangsöffnung stets auf einer Grundfläche einer erfindungsgemäßen Vorrichtung angeordnet. Für den Fall, dass eine erfindungsgemäße Vorrichtung so angeordnet ist, dass die Extruderschnecken bis in die Fließkanäle der erfindungsgemäßen Vorrichtung ragen sollen, so ist die Eingangsöffnung direkt hinter der Extruderschnecke angeordnet und umfasst somit die entsprechende Querschnittsfläche an der Stelle des Fließkanals nach der Extruderschnecke.

Im Rahmen der vorliegenden Erfindung wird die erste oder zweite Distanz wie vorstehend oder nachstehend beschrieben bevorzugt von dem geometrischen Mittelpunkts einer Eingangsöffnung in einer Grundfläche einer erfindungsgemäßen Vorrichtung bis zum geometrischen Mittelpunkts des mit dem besagten Eingangsöffnung verbundenen Ausgangsöffnung gemessen.

Im Rahmen der vorliegenden Erfindung werden die Ausdrücke "Formgebungsvorrichtung" und "Vorrichtung" synonym verwendet. Eine erfindungsgemäße Vorrichtung kann insbesondere einen Extruderkopf zusammen mit einer Vorleiste eines Extruders umfassen.

Im Rahmen der vorliegenden Erfindung überlappen sich die erste und zweite Grundfläche nicht und sind zwei von einander getrennte Flächen, wobei die beiden Flächen eine gemeinsame Kante aufweisen können.

Im Rahmen der vorliegenden Erfindung ist die Kontaktfläche eine ebene Fläche, wobei bevorzugt sämtliche Ausgangsöffnungen der Fließkanäle auf der einen Kontaktfläche angeordnet sind.

Bevorzugt ist eine erfindungsgemäße Vorrichtung wie vorstehend beschrieben oder wie vorstehend als bevorzugt beschrieben, wobei die Vorrichtung mehrteilig aufgebaut ist und ein erster Teil die Grundflächen und ein zweiter Teil die Kontaktfläche umfasst, wobei auch drei, vier, fünf oder sechs Grundflächen mit Eingangsöffnungen vorhanden sein können.

Bevorzugt ist eine erfindungsgemäße Vorrichtung wie vorstehend beschrieben oder wie vorstehend als bevorzugt beschrieben, wobei die Kontaktfläche mindestens so viele Ausgangsöffnungen wie Eingangsöffnungen sämtlicher Grundflächen einer erfindungsgemäßen Vorrichtung aufweisen.

Bevorzugt ist eine erfindungsgemäße Vorrichtung wie vorstehend beschrieben oder wie vorstehend als bevorzugt beschrieben, wobei das Verhältnis von der zweiten Distanz zu der ersten Distanz im Bereich von 1,1:1 bis 10:1 liegt, bevorzugt im Bereich von 1,1:1 bis 5:1, besonders bevorzugt im Bereich von 1,1:1 bis 2:1, ganz besonders bevorzugt im Bereich von 3:2 bis 2:1.

Ein Vorteil des vorstehend beschriebenen Aspekts der vorliegenden Erfindung ist, dass insbesondere die jeweiligen vorstehend beschriebenen Verhältnisse vorteilhafter sind als die anderen Verhältnisse.

Bevorzugt ist eine erfindungsgemäße Vorrichtung wie vorstehend beschrieben oder wie vorstehend als bevorzugt beschrieben, wobei die erste Grundfläche eins, zwei, drei, vier, fünf oder mehr als fünf Eingangsöffnungen aufweist, wobei bevorzugt zwei gegenüberliegende Wände eines oder mindestens eines der mit den besagten ein, zwei, drei, vier, fünf oder mehr als fünf Eingangsöffnungen verbundenen Fließkanals einen Verjüngungswinkel $\beta$ im Bereich von 10° bis 179° aufweisen, bevorzugt im Bereich von 30° bis 160°, besonders bevorzugt im Bereich von 50° bis 100°.

Im Rahmen der vorliegenden Erfindung verjüngen sich zumindest der in Fließrichtung hintere Teil der Ober- und Unterwand eines Fließkanals einer erfindungsgemäßen Formgebungsvorrichtung hin zum kontaktflächenseitigen Ende des Fließkanals, d.h. hin zum Ausgangsöffnung. Bevorzugt verjüngen sich die Ober- und Unterwand eines Fließkanals einer erfindungsgemäßen Formgebungsvorrichtung vom Eingangsöffnung bis hin zum Ausgangsöffnung. Im Rahmen der vorliegenden Erfindung wird der Verjüngungswinkel $\beta$ an zwei gegenüberliegenden Innenwänden der betrachteten Ober- und Unterwand des Fließkanals gebildet, wie dies auch in den nachstehenden Figuren gezeigt ist. Hierbei werden die Innenwände der im Querschnitt eines Fließkanals betrachteten Ober- und Unterwand gedanklich verlängert, bis sie sich kreuzen und dort den Verjüngungswinkel $\beta$ bilden, wobei die Querschnittsebene parallel zur Fließrichtung und parallel zur kürzesten Quererstreckung des Fließkanals verläuft. Letztere ist dabei in der Regel eine vertikale Erstreckung. Der Verjüngungswinkel ß wird im Rahmen der Erfindung stets an den Innenwänden der Fließkanäle von der ersten Grundfläche zur Kontaktfläche der Formgebungsvorrichtung ermittelt.

Bevorzugt ist eine erfindungsgemäße Vorrichtung wie vorstehend beschrieben oder wie vorstehend als bevorzugt beschrieben, wobei die zweite Grundfläche eins, zwei, drei, vier, fünf oder mehr als fünf Eingangsöffnungen aufweist, wobei bevorzugt zwei gegenüberliegende Wände eines oder mindestens eines der mit den besagten ein, zwei, drei, vier, fünf oder mehr als fünf Eingangsöffnungen verbundenen Fließkanals einen Verjüngungswinkel a im Bereich von 10° bis 100° aufweisen, bevorzugt im Bereich von 30° bis 60°. Der Verjüngungswinkel a wird im Rahmen der Erfindung stets an den Innenwänden der Fließkanäle von der zweiten Grundfläche zur Kontaktfläche der Formgebungsvorrichtung ermittelt.

Ein Vorteil des vorstehend beschriebenen Aspekts der vorliegenden Erfindung ist, dass auch bei den vorstehend beschriebenen Verjüngungswinkeln mit den anderen davor beschriebenen Verjüngungswinkeln ohne die Erhöhung von Druck oder Temperatur in den Fließkanälen eine höhere Austrittsgeschwindigkeit erreicht werden kann.

Besonders bevorzugt ist eine erfindungsgemäße Vorrichtung wie vorstehend beschrieben oder wie vorstehend als bevorzugt beschrieben, wobei das Verhältnis des Verjüngungswinkels a des längsten Fließkanals einer erfindungsgemäßen Formgebungsvorrichtung zu dem Verjüngungswinkels $\beta$ des kürzesten Fließkanals der erfindungsgemäßen Formgebungsvorrichtung im Bereich von 1,1:1 bis 30:1 liegt, bevorzugt im Bereich von 1,2:1 bis 15:1, besonders bevorzugt im Bereich von 1,4:1 bis 5:1, ganz besonders bevorzugt im Bereich von 3:2 bis 2:1.

Bevorzugt ist eine erfindungsgemäße Vorrichtung wie vorstehend beschrieben oder wie vorstehend als bevorzugt beschrieben, wobei der Innendurchmesser des kürzesten Fließkanals oder einer der Fließkanäle oder sämtlicher Fließkanäle an der jeweiligen Eingangsöffnung des Fließkanals im Bereich von 61 mm bis 500 mm liegt, bevorzugt im Bereich von 85 mm bis 300 mm, besonders bevorzugt im Bereich von 90 mm bis 250 mm.

Ein Vorteil des vorstehend beschriebenen Aspekts der vorliegenden Erfindung ist, dass auch bei Fließkanälen mit diesen Innendurchmesserbereichen eine höhere Austrittsgeschwindigkeit erreicht werden kann.

Im Rahmen der vorliegenden Erfindung ist der Innendurchmesser eines Fließkanals oder sämtlicher Fließkanäle bevorzugt der flächennormierte Innendurchmesser $I_F$ berechnet über die Formel (1):

$$I_F = \sqrt{(A/\pi)}, \qquad\qquad\qquad (1)$$

wobei A die Querschnittsfläche des Fließkanals an dem Punkt ist, wo der Innendurchmesser $I_F$ gebildet wird.

Bevorzugt ist eine erfindungsgemäße Vorrichtung wie vorstehend beschrieben oder wie vorstehend als bevorzugt beschrieben, wobei der Innendurchmesser einer der mit einer Eingangsöffnung der ersten Grundfläche verbundenen Fließkanäle oder sämtlicher mit einer Eingangsöffnung der ersten Grundfläche verbundenen Fließkanäle an der jeweiligen Eingangsöffnung des Fließkanals im Bereich von 61 mm bis 250 mm liegt, bevorzugt im Bereich von 85 mm bis 200 mm, besonders bevorzugt im Bereich von 90 mm bis 150 mm.

Ein Vorteil des vorstehend beschriebenen Aspekts der vorliegenden Erfindung ist, dass auch bei Fließkanälen mit diesen engeren Innendurchmesserbereichen eine entlang des Querschnitts gleichschnelle Austrittsgeschwindigkeit erreicht werden kann, insbesondere in Kombination mit den nachstehend beschriebenen Fließkanälen mit einem größeren Innendurchmesser.

Bevorzugt ist eine erfindungsgemäße Vorrichtung wie vorstehend beschrieben oder wie vorstehend als bevorzugt beschrieben, wobei der Innendurchmesser einer der mit einer Eingangsöffnung der zweiten Grundfläche verbundenen Fließkanäle oder sämtlicher mit einer Eingangsöffnung der zweiten Grundfläche verbundenen Fließkanäle an der jeweiligen Eingangsöffnung des Fließkanals im Bereich von über 200 mm bis 500 mm liegt, bevorzugt im Bereich von über 250 mm bis 500 mm, besonders bevorzugt im Bereich von 300 mm bis 500 mm.

Bevorzugt ist eine erfindungsgemäße Vorrichtung wie vorstehend beschrieben oder wie vorstehend als bevorzugt beschrieben, wobei die Kontaktfläche zwei, drei, vier, fünf, sechs, sieben, acht oder mehr als acht Ausgangsöffnungen aufweist.

Bevorzugt ist eine erfindungsgemäße Vorrichtung wie vorstehend beschrieben oder wie vorstehend als bevorzugt beschrieben, wobei die Fließkanäle von der ersten Grundfläche zur Kontaktfläche kürzer sind als die Fließkanäle von der zweiten Grundfläche zur Kontaktfläche, wobei die Fließkanäle von der ersten Grundfläche zur Kontaktfläche bevorzugt halb so lang sind wie die die Fließkanäle von der zweiten Grundfläche zur Kontaktfläche oder kürzer, bevorzugt ein Drittel so lang wie die die Fließkanäle von der zweiten Teilfläche der Grundfläche zur Kontaktfläche oder kürzer. Es gelten die Vorteile der vorstehend beschriebenen Aspekte der vorliegenden Erfindung. Wie vorstehend beschrieben wird die Länge oder Kürze eines Fließkanal hierbei mittels der geometrischen Mittelpunkte der Ein- und Ausgangsöffnungen ermittelt.

In besonders hohem Maße bevorzugt ist eine erfindungsgemäße Vorrichtung wie vorstehend beschrieben, umfassend:

- mindestens eine erste und eine zweite Grundfläche und
- eine Kontaktfläche sowie
- mehrere Fließkanäle zum Führen einer Kautschukmischung,
  wobei
- jede Grundfläche mindestens eine Eingangsöffnung zum Einführen einer Kautschukmischung in einen der Fließkanäle aufweist und
- die Kontaktfläche Ausgangsöffnungen zum Überführen einer Kautschukmischung in eine Endformeinheit zum Ausformen von Kautschukmischungen aufweist,

dadurch gekennzeichnet, dass
sich eine erste Distanz zwischen mindestens einer Eingangsöffnung der ersten Grundfläche und dem mit der jeweiligen Eingangsöffnung verbundenen Ausgangsöffnung auf der Kontaktfläche von einer zweiten Distanz zwischen mindestens einer Eingangsöffnung einer zweiten Grundfläche und mit der jeweiligen Eingangsöffnung verbundenen Ausgangsöffnung auf der Kontaktfläche
unterscheidet,
wobei

- das Verhältnis von der zweiten Distanz zu der ersten Distanz im Bereich von 3:2 bis 5:1 liegt,
- das Verhältnis des Verjüngungswinkels a des längsten Fließkanals einer erfindungsgemäßen Formgebungsvorrichtung zu dem Verjüngungswinkels β des kürzesten Fließkanals der erfindungsgemäßen Formgebungsvorrichtung im Bereich von 1,1:1 bis 30:1 liegt, bevorzugt im Bereich von 1,2:1 bis 15:1, besonders bevorzugt im Bereich von 1,4:1 bis 5:1, ganz besonders bevorzugt im Bereich von 3:2 bis 2:1,
- der Innendurchmesser sämtlicher Fließkanäle ausgehend von Eingangsöffnungen der Grundfläche im Bereich von 90 mm bis 250 mm liegt,
- die Kontaktfläche fünf oder sechs Ausgangsöffnungen aufweist
  und
- einer oder mehrere der Fließkanäle ausgehend von einer Eingangsöffnung der zweiten Grundfläche eine Gablung aufweisen und mit zwei Ausgangsöffnungen der Kontaktfläche verbunden sind.

Die vorstehend beschriebenen vorteilhaften Aspekte einer erfindungsgemäßen Vorrichtung zum Leiten von extrudierten Kautschukmischungen in eine Endformeinheit zum Ausformen von Kautschukmischungen gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte einer erfindungsgemäßen Vorrichtung zum Leiten von extrudierten Kautschukmischungen in eine Endformeinheit zum Ausformen von Kautschukmischungen.

Die Erfindung betrifft auch ein Verfahren zum Ausformen eines Kautschukprofils, umfassend die folgenden Schritte:

A) Extrudieren mindestens einer ersten und einer zweiten Kautschukmischung,

B) Leiten der ersten Kautschukmischung durch einen Fließkanal von der ersten Grundfläche zur Kontaktfläche in einer Vorrichtung wie vorstehend beschrieben oder wie vorstehend als bevorzugt beschrieben, wobei die erste Kautschukmischung eine Mooney-Viskosität (ML1+3 bei 100°) im Bereich von 50 MU bis 160 MU aufweist, bevorzugt im Bereich von mehr als 75 MU bis 120 MU aufweist,

C) Leiten der zweiten Kautschukmischung durch einen Fließkanal von der zweiten Grundfläche zur Kontaktfläche in einer Vorrichtung wie vorstehend beschrieben oder wie vorstehend als bevorzugt beschrieben,

D) Ausformen der mindestens ersten und zweiten Kautschukmischung in einer Endformeinheit zu einem Kautschukprofil.

Im Rahmen der vorliegenden Erfindung umfasst der Ausdruck "Endformeinheit" insbesondere in der Kautschukindustrie eingesetzte Endschablonen für Extruder oder eine "Final Die" für Extruder.

Bevorzugt ist ein erfindungsgemäßes Verfahren wie vorstehend beschrieben oder wie vorstehend als bevorzugt beschrieben, wobei die erste Kautschukmischung in Schritt B) eine Temperatur im Bereich von 40 bis 130°C und/oder einen Druck von 40 bar bis 300 bar aufweist.

Ein Vorteil des vorstehend beschriebenen Aspekts der vorliegenden Erfindung ist, dass die vorstehenden Drücke und Temperaturen für verschiedene Kautschukmischungen und Fließkanäle durch die erfindungsgemäße Anpassung der Fließkanallänge erreicht werden kann, wobei gleichzeitig eine über sämtliche Fließkanäle konstante Austrittsgeschwindigkeit erreicht wird.

Bevorzugt ist ein erfindungsgemäßes Verfahren wie vorstehend beschrieben oder wie vorstehend als bevorzugt beschrieben, wobei die erste Kautschukmischung in Schritt B) und/oder die zweite Kautschukmischung in Schritt C) einen Ausstoß an einem Kautschukprofil im Bereich von 100 bis 5000 kg pro Stunde aufweist, bevorzugt im Bereich von 800 bis 2400 kg pro Stunde, besonders bevorzugt im Bereich von 1000 bis 2200 kg pro Stunde.

Ein Vorteil des vorstehend beschriebenen Aspekts der vorliegenden Erfindung ist, dass die vorstehenden Austrittsgeschwindigkeit gleichmäßig für verschiedene Kautschukmischungen und Fließkanäle durch die erfindungsgemäße Anpassung der Fließkanallänge erreicht werden kann.

Die vorstehend beschriebenen vorteilhaften Aspekte einer erfindungsgemäßen Formgebungsvorrichtung zum Leiten von extrudierten Kautschukmischungen in eine Endformeinheit zum Ausformen von Kautschukmischungen und eines erfindungsgemäßen Verfahrens zum Ausformen eines Kautschukprofils gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Formgebungsvorrichtung zum Leiten von extrudierten Kautschukmischungen in eine Endformeinheit zum Ausformen von Kautschukmischungen und eines erfindungsgemäßen Verfahrens zum Ausformen eines Kautschukprofils.

Die Erfindung betrifft auch eine Verwendung einer Vorrichtung wie vorstehend beschrieben oder wie vorstehend als bevorzugt beschrieben, zum Leiten von extrudierten Kautschukmischungen in eine Endformeinheit zum Ausformen von Kautschukmischungen.

Bevorzugt ist eine erfindungsgemäße Verwendung wie vorstehend beschrieben oder wie vorstehend als bevorzugt beschrieben, wobei die erste Kautschukmischung eine Mooney-Viskosität (ML1+3 bei 100°) im Bereich von 35 MU bis 160 MU aufweist, bevorzugt im Bereich von mehr als 75 MU bis 120 MU

Bevorzugt ist eine erfindungsgemäße Verwendung wie vorstehend beschrieben oder wie vorstehend als bevorzugt beschrieben, wobei die zweite Kautschukmischung eine Mooney-Viskosität (ML1+3 bei 100°) im Bereich von 35 MU bis 120 MU aufweist, bevorzugt im Bereich von mehr als 40 MU bis 75 MU

Bevorzugt ist ein erfindungsgemäßes Verfahren wie vorstehend beschrieben oder wie vorstehend als bevorzugt beschrieben, wobei das Verhältnis der Mooney-Viskosität (ML1+3 bei 100°) der ersten Kautschukmischung zur Mooney-Viskosität (ML1+3 bei 100°) der zweiten Kautschukmischung im Bereich von 1,1:1 bis 30:1 liegt, bevorzugt im Bereich von 1,2:1 bis 15:1, besonders bevorzugt im Bereich von 1,4:1 bis 5:1, ganz besonders bevorzugt im Bereich von 3:2 bis 2:1.


**Figurenbeschreibung:**


Es zeigt:

Figur 1:    Querschnittsansicht auf eine herkömmliche Extruderanlage umfassend eine Vorschablone mit einer einteiligen Grundfläche;

Figur 2:    Querschnittsansicht auf eine Extruderanlage umfassend eine erfindungsgemäße Formgebungsvorrichtung mit einer mehrteiligen Grundfläche.


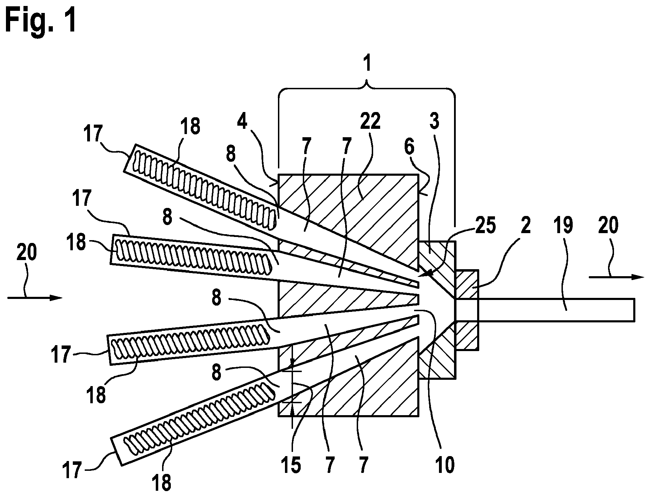

Figur 1 zeigt eine schematische Darstellung einer im Stand der Technik bekannten Formgebungsvorrichtung 1 zum Leiten von extrudierten Kautschukmischungen in eine Endformeinheit 2 zum Ausformen von Kautschukmischungen, umfassend eine Grundfläche 4 und eine Kontaktfläche 6 sowie vier Fließkanäle 7 zum Führen einer Kautschukmischung, wobei die Grundfläche 4 vier Eingangsöffnungen 8 zum Einführen einer Kautschukmischung in einen der vier Fließkanäle 7 aufweist und die Kontaktfläche 6 Ausgangsöffnungen 10 zum Überführen einer Kautschukmischung in eine Endformeinheit 2 zum Ausformen von Kautschukmischungen aufweist. In Figur 1 sind in Extrusionsrichtung 20 vor der Formgebungsvorrichtung 1 vier Extruder 17 mit Extruderschnecken 18 und in Extrusionsrichtung 20 nach der Formgebungsvorrichtung 1 eine Endformeinheit 2 schematisch dargestellt, wobei ein ausgeformtes Kautschukprofils 19 durch die Endformeinheit 2 wie in Figur 1 schematisch dargestellt ausgeformt wird. Zudem weist jeder Fließkanal 7 des Extruderkopf 22 ein kontaktflächenseitige Ende 25 und eine Eingangsöffnung 8 mit einem Innendurchmesser 15 auf.

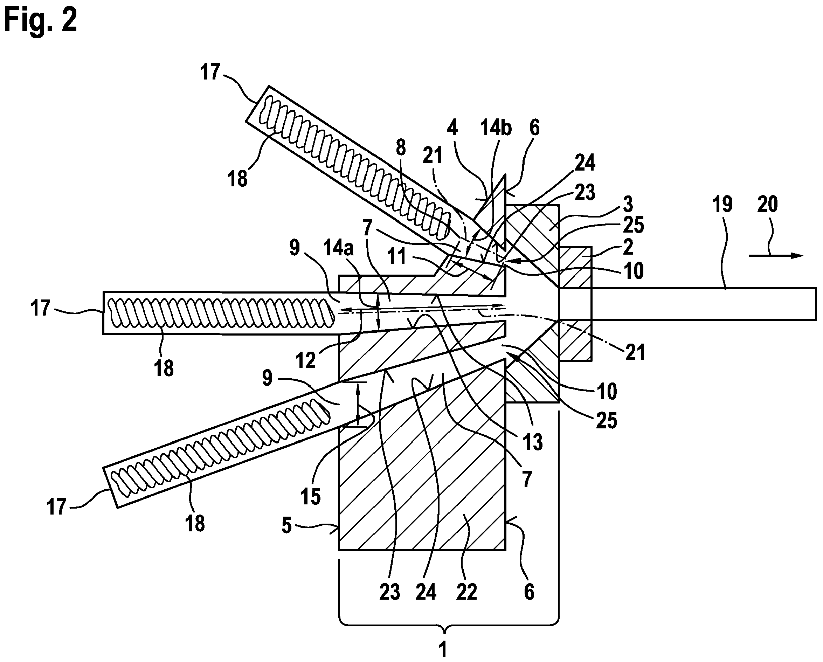

Figur 2 zeigt eine schematische Darstellung einer erfindungsgemäßen Formgebungsvorrichtung 1 zum Leiten von extrudierten Kautschukmischungen in eine Endformeinheit 2 zum Ausformen von Kautschukmischungen, umfassend eine erste und eine zweite Grundfläche 4, 5 und eine Kontaktfläche 6 sowie mehrere Fließkanäle 7 zum Führen einer Kautschukmischung, wobei jede Grundfläche 4, 5 mindestens eine Eingangsöffnung 8, 9 zum Einführen einer Kautschukmischung in einen der Fließkanäle 7 aufweist und die Kontaktfläche 6 Ausgangsöffnungen 10 zum Überführen einer Kautschukmischung in eine Endformeinheit 2 zum Ausformen von Kautschukmischungen aufweist, dadurch gekennzeichnet, dass sich eine erste Distanz 11 zwischen mindestens einer Eingangsöffnung 8 der ersten Grundfläche 4 und dem mit der jeweiligen Eingangsöffnung 8 verbundenen Ausgangsöffnung 10 auf der Kontaktfläche 6 von einer zweiten Distanz 12 zwischen mindestens einer Eingangsöffnung 9 der zweiten Grundfläche 5 und mit der jeweiligen Eingangsöffnung 9 verbundenen Ausgangsöffnung 10 auf der Kontaktfläche 6 unterscheidet. Die in Figur 2 gezeigte Formgebungsvorrichtung 1 weist einen Extruderkopf 22 und eine Vorformeinheit 3 auf. In Figur 2 sind in Extrusionsrichtung 20 vor der Formgebungsvorrichtung 1 drei Extruder 17 mit Extruderschnecken 18 und in Extrusionsrichtung 20 nach der Formgebungsvorrichtung 1 eine Endformeinheit 2 schematisch dargestellt, wobei ein ausgeformtes Kautschukprofils 19 durch die Endformeinheit 2 wie in Figur 2 schematisch dargestellt ausgeformt wird. Zudem ist in Figur 2 der Verjüngungswinkel a 14a zweier gegenüberliegender Wände 13 eines Fließkanals 7, die Mittelachse 21 eines Fließkanals 7 und der Innendurchmesser 15 einer Eingangsöffnung 9 an der zweiten Grundfläche 5 dargestellt. Zudem verjüngen sich die Innenwand 23 der Oberwand jeden Fließkanals 7 und die Innenwand 24 der Unterwand jeden Fließkanals 7 des Extruderkopf 22 hin zum kontaktflächenseitigen Ende 25. Dies gilt auch für den verkürzten Fließkanal 7 zwischen der ersten Grundfläche 4 und der Kontaktfläche 6, wobei der Verjüngungswinkel ß 14b durch die sich mit der Unterwand verjüngende Oberwand des Fließkanals 7 und gebildet wird.

**Bezugszeichenliste:**

| | |
|---|---|
| 1 | erfindungsgemäße Vorrichtung; Formgebungsvorrichtung zum Leiten von extrudierten Kautschukmischungen in eine Endformeinheit zum Ausformen von Kautschukmischungen |
| 2 | Endformeinheit zum Ausformen von Kautschukmischungen |
| 3 | Vorformeinheit zum Aufnehmen von extrudierten Kautschukmischungen aus Extruderköpfen |
| 4 | erste Grundfläche der Formgebungsvorrichtung |
| 5 | zweite Grundfläche der Formgebungsvorrichtung |
| 6 | Kontaktfläche der Formgebungsvorrichtung |
| 7 | Fließkanal zum Führen einer Kautschukmischung |
| 8 | Eingangsöffnung der ersten Grundfläche |
| 9 | Eingangsöffnung der zweiten Grundfläche |
| 10 | Ausgangsöffnungen der Kontaktfläche |
| 11 | erste Distanz zwischen einer Eingangsöffnung der ersten Grundfläche und dem mit der Eingangsöffnung verbundenen Ausgangsöffnung auf der Kontaktfläche |
| 12 | zweiten Distanz zwischen einer Eingangsöffnung einer zweiten Grundfläche und mit der Eingangsöffnung verbundenen Ausgangsöffnung auf der Kontaktfläche |
| 13 | zwei gegenüberliegende Wände eines Fließkanals |
| 14a | Verjüngungswinkel a des längsten Fließkanals |
| 14b | Verjüngungswinkel ß des kürzesten Fließkanals |
| 15 | Innendurchmesser am Eingangsöffnung eines Fließkanals |
| 17 | Extruder |
| 18 | Extruderschnecke |
| 19 | ausgeformtes Kautschukprofil |
| 20 | Extrusionsrichtung |
| 21 | Mittelachse eines Fließkanals |
| 22 | Extruderkopf |
| 23 | Innenwand der Oberwand eines Fließkanals |

24    Innenwand der Unterwand eines Fließkanals

25    kontaktflächenseitige Ende eines Fließkanals

**Patentansprüche**

1.  Formgebungsvorrichtung zum Leiten von extrudierten Kautschukmischungen in eine Endformeinheit (2) zum Ausformen von Kautschukmischungen, umfassend

- mindestens eine erste und eine zweite Grundfläche (4, 5) und
- eine Kontaktfläche (6) sowie
- mehrere Fließkanäle (7) zum Führen einer Kautschukmischung,
wobei
- jede Grundfläche (4, 5) mindestens eine Eingangsöffnung (8, 9) zum Einführen einer Kautschukmischung in einen der Fließkanäle (7) aufweist und
- die Kontaktfläche (6) Ausgangsöffnungen (10) zum Überführen einer Kautschukmischung in eine Endformeinheit (2) zum Ausformen von Kautschukmischungen aufweist,
**dadurch gekennzeichnet, dass**
sich
- eine erste Distanz (11) zwischen mindestens einer Eingangsöffnung (8) der ersten Grundfläche (4) und dem mit der jeweiligen Eingangsöffnung (8) verbundenen Ausgangsöffnung (10) auf der Kontaktfläche (6)
- von einer zweiten Distanz (12) zwischen mindestens einer Eingangsöffnung (9) einer zweiten Grundfläche (5) und mit der jeweiligen Eingangsöffnung (9) verbundenen Ausgangsöffnung (10) auf der Kontaktfläche (6) unterscheidet.

2.  Vorrichtung nach Anspruch 1, wobei das Verhältnis von der zweiten Distanz (12) zu der ersten Distanz (11) im Bereich von 1,1:1 bis 30:1 liegt, bevorzugt im Bereich von 1,2:1 bis 15:1, besonders bevorzugt im Bereich von 1,4:1 bis 5:1, ganz besonders bevorzugt im Bereich von 3:2 bis 2:1.

3.  Vorrichtung nach einem der vorangehenden Aspekte, wobei die erste Grundfläche (4) eins, zwei, drei, vier, fünf oder mehr als fünf Eingangsöffnungen (8) aufweist, wobei bevorzugt zwei gegenüberliegende Wände (23, 24) eines oder mindestens eines der mit den besagten ein, zwei, drei, vier, fünf oder mehr als fünf Eingangsöffnungen (8) verbundenen Fließkanals (7) einen Verjüngungswinkel β 14b im Bereich von 10° bis 179° aufweisen, bevorzugt im Bereich von 30° bis 160°, besonders bevorzugt im Bereich von 50° bis 100°.

4.  Vorrichtung nach einem der vorangehenden Aspekte, wobei die zweite Grundfläche (5) eins, zwei, drei, vier, fünf oder mehr als fünf Eingangsöffnungen (9) aufweist, wobei bevorzugt zwei gegenüberliegende Wände (23, 24) eines oder mindestens eines der mit den besagten ein, zwei, drei, vier, fünf oder mehr als fünf Eingangsöffnungen (9) verbundenen Fließkanals (7) einen Verjüngungswinkel a 14a im Bereich von 10° bis 100° aufweisen, bevorzugt im Bereich von 30° bis 60°.

5.  Vorrichtung nach einem der vorangehenden Aspekte, wobei

- ein Innendurchmesser des kürzesten Fließkanals (7) oder einer der Fließkanäle (7) oder sämtlicher Fließkanäle (7) an der jeweiligen Eingangsöffnung (8) des Fließkanals im Bereich von 61 mm bis 500 mm liegt, bevorzugt im Bereich von 85 mm bis 300 mm, besonders bevorzugt im Bereich von 90 mm bis 250 mm, und/oder
- der Innendurchmesser (15) einer der mit einer Eingangsöffnung (8) der ersten Grundfläche (4) verbundenen Fließkanäle (7) oder sämtlicher mit einer Eingangsöffnung (8) der ersten Grundfläche (4) verbundenen Fließkanäle (7) an der jeweiligen Eingangsöffnung (8) des Fließkanals (7) im Bereich von 61 mm bis 250 mm liegt, bevorzugt im Bereich von 85 mm bis 200 mm, besonders bevorzugt im Bereich von 90 mm bis 150 mm, und/oder
- der Innendurchmesser (15) einer der mit einer Eingangsöffnung (9) der zweiten Grundfläche (5) verbundenen Fließkanäle (7) oder sämtlicher mit einer Eingangsöffnung (9) der zweiten Grundfläche (5) verbundenen Fließkanäle (7) an der jeweiligen Eingangsöffnung (9) des Fließkanals (7) im Bereich von über 200 mm bis 500 mm liegt, bevorzugt im Bereich von über 250 mm bis 500 mm, besonders bevorzugt im Bereich von 300 mm bis 500 mm.

6. Vorrichtung nach einem der vorangehenden Ansprüche, wobei die Kontaktfläche (6) zwei, drei, vier, fünf, sechs, sieben, acht oder mehr als acht Ausgangsöffnungen (10) aufweist.

7. Verwendung einer Vorrichtung (1) wie in einem der Ansprüche 1 bis 6 definiert zum Leiten einer ersten Kautschukmischungen durch einen Fließkanal (7) von der ersten Grundfläche (4) zur Kontraktfläche (6) und einer zweiten Kautschukmischungen durch einen Fließkanal (7) von der zweiten Grundfläche (5) zur Kontraktfläche (6) in eine Endformeinheit (2) zum Ausformen von Kautschukmischungen.

8. Verwendung nach Anspruch 7, wobei die Kautschukmischung eine Mooney-Viskosität (ML1+3 bei 100°) im Bereich von 35 MU bis 160 MU aufweist, bevorzugt im Bereich von mehr als 75 MU bis 120 MU

9. Verfahren zum Ausformen eines Kautschukprofils, umfassend die folgenden Schritte:

A) Extrudieren mindestens einer ersten und einer zweiten Kautschukmischung,
B) Leiten der ersten Kautschukmischung durch einen Fließkanal (7) von der ersten Grundfläche (4) zur Kontaktfläche (6) in einer Vorrichtung (1) nach den Ansprüchen 1 bis 7, wobei die erste Kautschukmischung eine Mooney-Viskosität (ML1+3 bei 100°) im Bereich von 50 MU bis 160 MU aufweist, bevorzugt im Bereich von mehr als 75 MU bis 120 MU aufweist,
C) Leiten der zweiten Kautschukmischung durch einen Fließkanal (7) von der zweiten Grundfläche (5) zur Kontaktfläche (6) in einer Vorrichtung (1) nach den Ansprüchen 1 bis 6,
D) Ausformen der mindestens ersten und zweiten Kautschukmischung in einer Endformeinheit (2) zu einem Kautschukprofil.

10. Verfahren nach Anspruch 9, wobei die erste Kautschukmischung eine Mooney-Viskosität (ML1+3 bei 100°) im Bereich von 35 MU bis 160 MU aufweist, bevorzugt im Bereich von mehr als 75 MU bis 120 MU.

11. Verfahren nach einem der Ansprüche 9 bis 10, wobei die zweite Kautschukmischung eine Mooney-Viskosität (ML1+3 bei 100°) im Bereich von 35 MU bis 120 MU aufweist, bevorzugt im Bereich von mehr als 40 MU bis 75 MU

12. Verfahren nach einem der Ansprüche 9 bis 11, wobei das Verhältnis der Mooney-Viskosität (ML1+3 bei 100°) der ersten Kautschukmischung zur Mooney-Viskosität (ML1+3 bei 100°) der zweiten Kautschukmischung im Bereich von 1,1:1 bis 30:1 liegt, bevorzugt im Bereich von 1,2:1 bis 15:1, besonders bevorzugt im Bereich von 1,4:1 bis 5:1, ganz besonders bevorzugt im Bereich von 3:2 bis 2:1.

# Fig. 1

Fig. 2

EP 3 769 931 A1

Europäisches
Patentamt

European
Patent Office

Office européen
des brevets

# EUROPÄISCHER RECHERCHENBERICHT

Nummer der Anmeldung

EP 20 17 8679

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 43 04 174 A1 (TROESTER MASCHF PAUL [DE]) 25. August 1994 (1994-08-25)<br>* Zusammenfassung *<br>* Abbildungen 2,4 *<br>----- | 1-12 | INV.<br>B29C48/25<br>B29C48/30<br>B29C48/00<br>B29C48/16<br>B29C48/49 |
| X | JP H06 210699 A (SUMITOMO RUBBER IND) 2. August 1994 (1994-08-02)<br>* Zusammenfassung *<br>* Absätze [0001] - [0006] *<br>* Abbildung 1 *<br>----- | 1-12 | |
| X | JP 2002 264200 A (BRIDGESTONE CORP) 18. September 2002 (2002-09-18)<br>* Zusammenfassung *<br>* Absatz [0042] *<br>* Abbildung 2 *<br>----- | 1-12 | |

RECHERCHIERTE
SACHGEBIETE (IPC)

B29C
B29K

Der vorliegende Recherchenbericht wurde für alle Patentansprüche erstellt

| Recherchenort | Abschlußdatum der Recherche | Prüfer |
|---|---|---|
| München | 23. November 2020 | Koning, Erik |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 17 8679

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2020

| Im Recherchenbericht angeführtes Patentdokument | Datum der Veröffentlichung | Mitglied(er) der Patentfamilie | Datum der Veröffentlichung |
|---|---|---|---|
| DE 4304174 A1 | 25-08-1994 | KEINE | |
| JP H06210699 A | 02-08-1994 | KEINE | |
| JP 2002264200 A | 18-09-2002 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3221117 A1
- EP 3288741 A1